Europäisches Patentamt

European Patent Office

Office européen des brevets

(19)

(11) Veröffentlichungsnummer: **0 077 798**
**B1**

(12) **EUROPÄISCHE PATENTSCHRIFT**

(45) Veröffentlichungstag der Patentschrift:
19.03.86

(51) Int. Cl.⁴: **A 01 G 31/02**

(21) Anmeldenummer: 82901403.4

(22) Anmeldetag: 29.04.82

(86) Internationale Anmeldenummer:
**PCT/DE 82/00095**

(87) Internationale Veröffentlichungsnummer:
**WO 82/03746 (11.11.82 Gazette 82/27)**

(54) **HYDROTANK FÜR HYDROKULTUREN.**

(30) Priorität: 30.04.81 DE 3117262

(43) Veröffentlichungstag der Anmeldung:
04.05.83 Patentblatt 83/18

(45) Bekanntmachung des Hinweises auf die Patenterteilung:
19.03.86 Patentblatt 86/12

(84) Benannte Vertragsstaaten:
**AT BE CH FR GB LI LU NL SE**

(56) Entgegenhaltungen:
**DE - A - 2 634 037**
**DE - U - 7 506 993**

(73) Patentinhaber: KRÖBER, Lutz, Abbachstrasse 24,
D-8000 München 50 (DE)

(72) Erfinder: KRÖBER, Lutz, Abbachstrasse 24,
D-8000 München 50 (DE)

(74) Vertreter: Klunker, Hans-Friedrich, Dr. et al,
Patentanwälte Klunker . Schmitt-Nilson . Hirsch
Winzererstrasse 106, D-8000 München 40 (DE)

LIBER, STOCKHOLM 1986

**Beschreibung**

Die Erfindung betrifft einen Hydrotank für Hydrokulturen, bestehe d aus einem geschlossenen Vorratstank, der bis unter den im Kulturtopf gewün schten Nährlösungsspiegel hinabreicht, mit einem getrennten Einfüllkanal im oder am Vorratsgefäß, dessen Ausflußöffnung nahe dem Boden des Kulturtopfs liegt und mit dem Vorratstank kommuniziert, Öffnung nahe dem Boden des Kulturtopfes, welche, Vorratstank und Kultopf, mireinander verbindet, und durch ihre Größe oder Anordnung strömungsdrosselnd wirkt, und mit einer weiteren Verbindung zwischen vorratsraum und Kulturtopf.

Wie jeder Blumenfreund weiß, tut es den Pflanzen gut, wenn sie sozusagen immer wieder trockenfallen anstatt dauernd naßgehalten zu werden; auch alle Geschäftsbetriebe für Hydrokultur geben als Gießanleitung, den Wasserstand absinken zu lassen, bevor neu aufgefüllt wird. Auf dem Gebiet der Wasserbevorratung bei Zimmerpflanzen wird weder der Stand der Technik noch der Markt diesem Umstand gerecht. Alle Vorschläge und alle auf dem Markt erscheinenden Systeme zielen darauf ab, einen festgelegten Wasserstand zu halten.

Beis-piele für derartige Übertöpfe, jedoch für Erdkulturen, sind beispielsweise in den deutschen Gebrauchsmusterschriften DE-U-75 06 994 und DE-U-75 06 993 zu finden. Gemeinsames Merkmal aller dieser Vorschläge ist der immer gleichbleibende Wasserstand im eigentlichen Pflanzengefäß. Verschiedene Vorschläge sind darüber hinaus noch insoweit nachteilig, als sie eine zwischenzeitliche Nachfüllung des Tanks nicht gestatten oder eine besonders anspruchsvolle luftdichte Verschlußkonstruktion des Tanks bedingen.

In einem Standardwerk, das sich mit Fragen der Hydrokultur befaßt (Margot Schubert, Mehr Blumenfreude durch Hydrokultur, BLV Verlagsgesellschaft, München, Bern, Wien, 6. Auflage, 1979) wird ausgeführt, daß das Grundproblem der Anwendung von Hydrokulturen in der Wasserversorgung liegt. Zur Lösung dieses prekären Problems wird in dem Standardwerk eine Art Vogeltränke vorgeschlagen, die aus einem geschlossenen, um seine Hauptachse drehbaren Zylinder besteht, der in gefülltem Zustand nach unten verdreht wird und den Flüssigkeitsspiegel im Pflanzgefäß sodann immer auf einem bestimmten Niveau halten soll. Es ist offensichtlich, daß diese Lösung auf die Form der Kulturtöpfe einen ungünstigen Einfluß hat. Blumenfreunde sind wohl immer auch ästhetisch anspruchsvoll und lehnen rein technisch bedingte Formen von Kulturtöpfen in der Regel ab.

Der Erfindung liegt daher die Aufgabe zugrunde, einen Hydrotank für Hydrokulturen zu schaffen, der die ästhetische Formgestaltung von Kulturtöpfen möglichst wenig beeinträchtigt und der darüber hinaus den Eigenarten der Pflanzen insoweit gerecht wird, als er einen selbsttätig intermittierenden Flüssigkeitsspiegel im Kulturtopf erzeugt.

Erfindungsgemäß wird diese Aufgabe bei einem eingangs genannten Hydrotank dadurch gelöst, daß eine separate Füllkammer vorgesehen ist, die über einen Überlauf mit dem Vorratstank in Verbindung steht und die in ihrem unteren Bereich über vertikale Schlitze mit dem Kulturtopf in Verbindung steht, wobei und Breite der Schlitze den Flüssigkeitsspiegel im Kulturtopf dadurch definerten, daß die Flüssig- keit zwischen den Rändern der Schlitze infolge ihrer Oberflächenspannung Menisken bildet, welche mit der Oberfläche der Flüssigkeit im Topf zusammenhängen.

Weitere vorteilhafte Ausgestaltungen der Erfindung sind Gegenstand der Unteransprüche.

Die Ausbildung des Hydrotanks als separater Einsatz hat den Vorteil, daß bereits im Verkehr befindliche Kulturtöpfe jederzeit mit dem erfindungsgemäßen Hydrotank nachgerüstet werden können. Der Tank kann quasi unsichtbar in der Substratfüllung versenkt werden.

Die Ausbildung des Hydrotanks als Einsatz mit kreisringförmigem Querschnitt hat vor alldem den Vorteil, daß bei Verwendung runder, zylinderförmiger Töpfe eine nahezu unsichtbare Unterbringung des Tanks ermöglicht wird. Auch die Lagerhaltung derartiger Hydrotanks wird dadurch vereinfacht, daß Tanks verschiedenen Durchmessers ineinandergeschachtelt werden können.

Die Breite der Schlitze soll vorzugsweise so bemessen werden, daß die Nährlösung zwischen den Rändern der Schlitze bedingt durch ihre Oberflächenspannung einen Meniskus bildet. Dieser Meniskus sperrt praktisch das in der Füllkammer befindliche Volumen zunächst ab und verhindert ihr Einfließen in den Kulturtopf, bis das Niveau im Kulturtopf auf ein Minimum gesunken ist. Erst dann bricht die in der Füllkammer vorhandene Flüssigkeit durch die Schlitze durch und setzt die Füllung des Kulturtopfs durch die entweder zwischen Vorratstank und Kulturtopf oder zwischen Vorratstank und Füllkammer angeordnete Drosselöffnung in Gang.

Vorzugsweise ist das Volumen der Füllkammer im Vergleich zum Volumen der im Kulturtopf befindlichen Flüssigkeitsmenge klein. Nur dadurch wird sichergestellt, daß die Füllkammer vollstänig leerläuft, wenn das Minimumniveau im Kulturtopf erreicht ist.

Um eine Füllung des Kulturtopfs nach "Ansprechen" bzw. Unterschreiten des minimalen Niveaus im Kulturtopf möglichst schnell zu bewerkstelligen, ist es vorteilhaft, wenn sich der durch die Schlitze definierte Austrittsquerschnitt in Bodennähe erweitert.

Mit der erfindungsgemäßen Hydrotank wird erstmals die Möglichkeit geschaffen, Pflanzen unter Anwendung eines einfachen hydromechanischen Verschlusses intermittierend zu bewässern. Die Schlitze übernehmen dabei eine Art Steuerungsfunktion.

Nachstehend wird eine Ausführungsform der Erfindung anhand der beigefügten Zeichnung beispielsweise beschrieben. Darin zeigen:

Fig. 1 einen Vertikalschnitt durch einen Hydrotank gemäß einer ersten Ausführungsform,

Fig. 2 einen Horizontalschnitt durch diesen Hydrotank und

Fig. 3a seitliche Ansichten der in dem Hydrotank anbis c geordneten Trennwände.

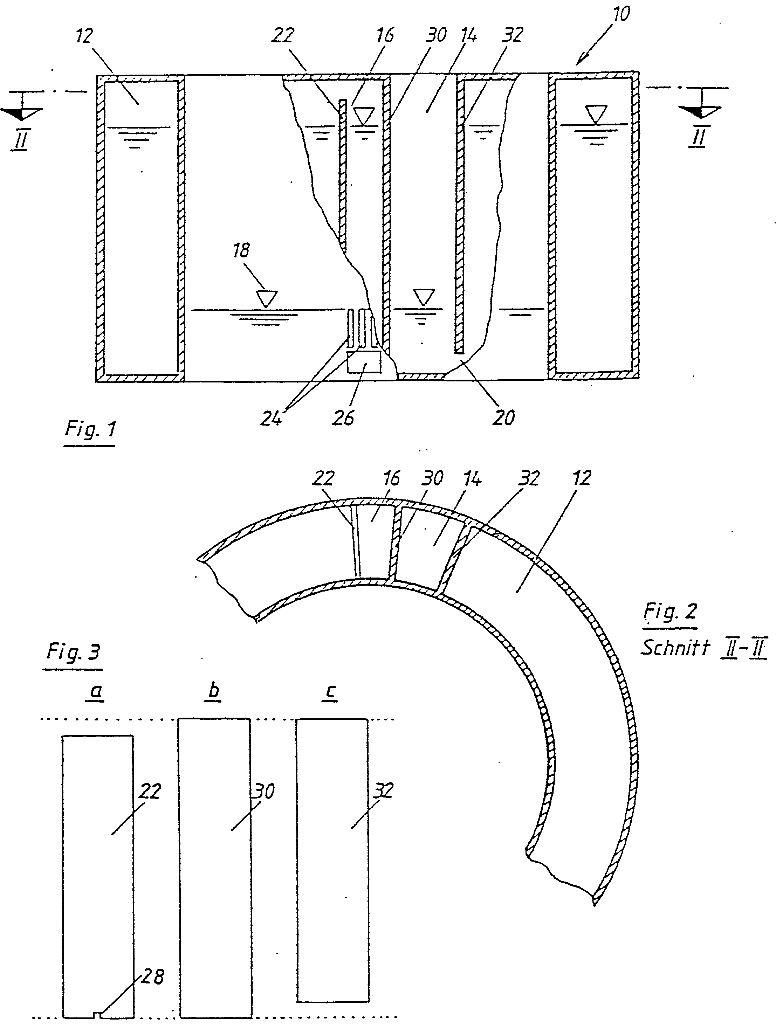

In den Figuren ist ein als separater Einsatz ausgebildeter Hydrotank 10 dargestellt. Der Hydrotank besteht im wesentlichen aus einem zylindermantelförmigen Hohlkörper, der einerseits den eigentlichen Vorratstank 12, den Einfüllkanal 14 und die Füllkammer 16 enthält. Die Anordnung der einzelnen Kammern ergibt sich am besten aus Fig. 2.

Der Hydrotank 10 wird in einen zylindrischen Kulturtopf eingesetzt, dessen lichte Weite etwa dem Außendurchmesser des Hydrotanks 10 entspricht. Der Hydrotank sitzt auf dem Boden des Kulturtopfs auf. Das Niveau des Flüssigkeitsspiegels im Kulturtopf ist durch den Pfeil 18 angedeutet. Nahe dem unteren Rand des Hydrotanks bzw. dem Boden des Kulturtopfs weist der Einfüllkanal 14 eine Verbindungsöffnung 20 zum eigentlichen Vorratstank auf. Die Füll-kammer 16 ist gegenüber dem Vorratstank 12 durch eine nicht bis zur Deckwand des Vorratstanks 12 reichende Wand 22 getrennt. Es entsteht auf diese Weise ein wehrartiger Überlauf, der eine Verbindung zwischen dem Tank und der Einfüllkammer sicherstellt.

In der unteren, die Einfüllkammer 16 vom im Kulturtopf befindlichen Flüssigkeitsvolumen trennenden Wand, sind senkrechte Schlitze 24 ausgebildet. Bei der gezeigten Ausführungsform reichen die Schlitze nicht ganz bis zum Boden des Kulturtopfs, im unteren Bereich ist vielmehr eine maulartige Öffnung 26 ausgebildet. Das obere Ende der Schlitze 24 definiert den maximalen Regelwasserstand im Kulturtopf.

In der Trennwand 22 zwischen Vorratstank 12 und Einfüllkanal 14 ist nahe dem Boden eine kleine Drosselöffnung 28 angeordnet (Fig. 3). Diese Drosselöffnung 28 könnte ebenfalls in derjenigen Wandung des Vorratstanks angeordnet sein, die den Vorratstank vom Flüssigkeitsvolumen im Kulturtopf trennt. Die gezeigte Anordnung ist jedoch insofern vorteilhaft, als die Gefahr eines Verstopfens der Drosselöffnung 28 durch Wurzeln wesentlich herabgesetzt wird.

In Fig. 3 sind die Trennwände zwischen den einzelnen Kammern separat dargestellt, die Fig. 3a zeigt eine Seiten: ansicht der Trennwand 22. Man erkennt, daß die Trennwand 22 nicht die volle Höhe des Vorratstanks ausfüllt so daß die Oberkante einen Überlauf in die eigentliche Füllkammer 16 bildet Die Trennwand 30 zwischen Einfüllkammer und Einfüllkanal 14 ist durchgehend. Sie wird von keinerlei Öffnung durchbrochen. Diese Wand ist in Fig. 3b dargestellt. Die Trennwand 32 zwischen Einfüllkanal 14 und Vor-ratsgefäß 12 ist in Fig. 3c gezeigt. Man erkennt, daß nahe dem Boden ein Durchlauf vom Einfüllkanal in den Vorratstank gebildet ist.

Der Hydrotank funktioniert folgendermaßen. Nachdem er leer in einen zylindrischen Kulturtopf eingesetzt ist, wird der Topf über die obere Öffnung des Einfüllkanals 14 gefüllt. Das Wasser tritt durch die Verbindungsöffnung 20 vom Einfüllkanal 14 her in den Vorratstank 12 ein und steigt dort langsam nach oben. Die Entlüftung erfolgt über die Einfüllkammer 16 und die Schlitze 24 bzw. die Öffnung 26. Ist das Niveau im Vorratstank 12 bis zur Oberkante der Trennwand 22 gestiegen, füllt das übertretende Wasser den Kulturtopf bis zum in Fig. 1 durch den Pfeil 18 angedeuteten Niveau. Diese Füllung kann relativ rasch erfolgen, da das Wasser über den Austrittsquerschnitt der Schlitze 24 und der Öffnung 26 in den eigentlichen Kulturtopf übertritt. Das Ansteigen des Flüssigkeitsspiegels in dem Kulturtopf sollte über einen entsprechenden Wasserstandsanzeiger verfolgt werden, so daß das maximale Regelniveau nicht überschritten wird. Dieser Wasserstandsanzeiger ist normalerweise mit einem Einsatz verbunden, der das eigentliche Substrat enthält, in welches die Pflanze eingesetzt ist. Dieser Einsatz sollte im beschriebenen Fall einen Außendurchmesser haben, welcher der lichten Weite des kreisringförmigen Vorratstanks 12 entspricht. Derartige Einsätze sind üblich und im Handel frei erhältlich.

Nach Füllung des Kulturtopfs tritt durch die Flüssigkeitsaufnahme der Pflanze und die V rdunstung eine allmähliche Absenkung des Flüssigkeitsniveaus im Kulturtopf ein, der Flüssigkeitsspiegel sinkt unter die in Fig. 1 angegebene Stellung. Ein Nachfließen von Flüssigkeit aus der Füllkammer 16 wird jedoch zunächst nicht eintreten, da die Schlitze 24 durch infolge der Oberflächenspannung gebildete Menisken zwischen den Rändern der Schlitze ein Nachfließen verhindern. Erst wenn der Flüssigkeitsspiegel in die Nähe des unteren Endes der Schlitze gelangt ist, wird der hydrostatische Druck, der auf die Menisken wirkt, so stark, daß sie "durchbrechen" und sich der Inhalt der Füllkammer 16 in den Kulturtopf entleert. Dabei steigt jedoch der Spiegel im Kulturtopf noch nicht wieder bis zu der in Fig. 1 gezeigten Marke an. Diese Füllung wird vielmehr allmählich über durch die Drosselöffnung 28 aus dem Vorratstank 12 nachströmende Flüssigkeit erreicht. Der Flüssigkeitsspiegel kommt schließlich bei einem Niveau zum Stillstand, das durch die obere Begrenzung der Schlitze bestimmt ist, wie dies auch in Fig. 1 dargestellt ist.

Das beschriebene Verhalten bedeutet also ein periodisches Absenken und Wiederansteigen des Flüssigkeitsniveaus im Kulturtopf, das die Pflanzen für ein optimales Gedeihen benötigen. Wie schon eingangs ausgeführt wurde, wäre ein immer gleichbleibender Flüssigkeitsstand im Kulturtopf nicht optimal. Die Scülitze übernehmen im vorliegenden Fall eine Art Steuerfunktion, ohne daß es dazu irgendwelcher mechanischer bewegter Teile oder anderer Zeitmeßele-mente bedürfte.

Ein im vorliegenden Zusammenhang nicht unwesentlicher Vorteil ist auch darin zu sehen, daß die Höhe des Tanks so bemessen werden kann, daß noch eine Schicht des Substrats über dem Tank angeordnet werden kann, so daß bei einer Betrachtung des Kulturtopfs das Vorhandensein des Hydrotanks nicht festgestellt werden kann. Damit erfüllt dieser Hydrotank in hervorragender Weise auch alle ästhetischen Ansprüche, die von Blumenliebhabern normalerweise gestellt werden.

Der außen hochstehende Rand gemäß Anspruch 7 soll verhindern, daß die Substratkörperchen beim Herausnehmen des Einsatzes oder beim Umtopfen herausfallen.

Die Drosselöffnung 28 kann in einer anderen Ausführungsform der Erfindung auch durch eine wesentlich größere Öffnung im Tankboden ersetzt werden. Die erforderliche Drosselwirkung wird nun dadurch erreicht, daß der der Öffnung nachgeschaltete Strömungsweg entsprechend eng gestaltet ist. Im Fall eines kreisringförmigen Tanks mit ebenem Boden kann dies dadurch erreicht werden, daß der Boden insgesamt um einen geringen Betrag über dem eigentlichen Boden des Gefäßes angeordnet wird. Zu diesem Zweck kann der Tank auf einem umlaufenden Wulst oder einem umlaufenden Rand aufsitzen.

Mit dieser Maßnahme kann einer eventuell gegebenen Verstopfungs- oder Verschmutzungsgefahr begegnet werden.

## Patentansprüche

1. Hydrotank (10) für Hydrokultur, bestehend aus einem geschlossenen Vorratsraum (12), der bis unter den im Kulturtopf gewünschten Nährlösungsspiegel (18) hinabreicht, mit einem getrennten Einfüllkanal (14) im oder am Vorratsgefäß, dessen Ausflußöffnung (20) nahe dem Boden des Kulturtopfes liegt und mit dem Vorratstank (12) kommuniziert, mit einer Öffnung (28) nahe dem Boden des Kulturtopfes, welche Vorratstank und Kulturtopf miteinander verbindet und durch ihre Größe oder Anordnung strömungsdrosselnd wirkt, und mit einer weiteren Verbindung zwischen Vorratsraum (18) und Kulturtopf dadurch gekennzeichnet, daß eine separate Füllkammer (16) welche über einen Überlauf mit dem Vorratsraum (12) in Verbindung steht, in ihrem unteren Bereich mit dem Kulturtopf über vertikale Schlitze (24) in Verbindung steht, wobei Höhe und Breite der Schlitze (24) den Flüssigkeitsspiegel (18) im Kulturtopf dadurch definieren, daß die Flüssigkeit zwischen den Rändern der Schlitze (24) infolge ihrer Oberflächenspannung Menisken bildet, welche mit der Oberfläche (18 der Flüssigkeit im Topf zusammenhängen.

2. Hydrotank nach Anspruch 1, dadurch gekennzeichnet, daß er als separater Einsatz ausgebildet ist.

3. Hydrotank nach Anspruch 1 oder 2, dadurchgekennzeichnet, daß Vorratstank (12), Einfüllkanal (14) und Füllkammer (16) als integrales Bauteil mit kreisringförmigem Querschnitt zum Einsatz in entsprechende Kulturtöpfe ausgebildet sind.

4. Hydrotank nach einem der Ansprüche 1 bis 3,dadurch gekennzeichnet, daß das Volumen der Füllkammer (16) im Vergleich zum Volumen der im Kulturtopf befindlichen Flüssigkeitsmenge klein ist.

5. Hydrotank nach einem der Ansprüche 1 bis 4,dadurch gekennzeichnet, daß in Bodennähe der durch die Schlitze (24) definierte Austrittsquerschnitt erweitert ist.

6. Hydrotank nach Anspruch 3, dadurch gekennzeichnet, daß die Außenwand des Einsatzes über die obere-Begrenzung des Tanks hinausreicht.

7. Hydrotank-nach Anspruch 3 oder 6,dadurchgekennzeichnet, daß die Einfüllöffnung des Einfüllkanals (14) trichterförmig erweitert ist.


## TRANSLATION OF CLAIMS

1. A hydro-tank (10) for hydroponics, comprising a closed storage space (12) extending down below the level (18) of nutritive solution desired in the cultivating pot, a separate filling channel (14) in or on the storage vessel, the outlet (20) of which is located near the bottom of the cultivating pot and communicates with the storage tank (12), an opening (28) near the bottom of the cultivating pot connecting the storage tank and the cultivating pot and having a flow-throttling effect due to its size or arrangement, and a further connection between the storage space (18) and the cultivating pot,characterized in that a separate filling chamber (16), which communicates with the storage space (12) via an overflow, communicates in its lower area with the cultivating pot via vertical slots (24), the height and width of the slots (24) defining the level (18) of liquid in the cultivating pot in that the liquid forms menisci due to its surface tension between the edges of the slots (24), said menisci adhering with the surface (18) of the liquid in the pot.

2. The hydro-tank according to claim 1, characterized in that it is designed as a separate inset.

3. The hydro-tank according to claim 1 or 2,characterized in that the storage tank (12), the filling channel (14) and the filling chamber (16) are designed as an integral component with an annular cross-section for insertion in appropriate cultivating pots.

4. The hydro-tank according to any of claims 1 to 3,characterized in that the volume of the filling chamber (16) is small compared with the volume of the amount of liquid located in the cultivating pots.

5. The hydro-tank according to any of claims 1

to 4, <u>characterized</u> in that the exit section defined by the slots (24) is wider in the vicinity of the bottom. 6. The hydro-tank according to claim 3, characterized <u>inthat the outer wall of the inset extends beyond the upper limit of the tank.</u>

<u>7. The hydro-tank according to claim 3 or 6,</u> <u>characterized</u> in that the filling opening of the filling channel (14) has a funnel-shaped extension.

**Revendications**

1. Un reservoir (10) pour la culture hydroponique consistant en une caisse de rèserve (12) fermée s'etendant jusqu'au-dessous du niveau (18) de solution nutritive désiré dans le pot à culture, un conduit de remplissage (14) séparé dans ou sur la caisse de réserve dont l'orifice d'écoulement (20) est situé pres du fond du pot à culture et communique avec la caisse de réserve (12), un orifice (28) près du fond du pot à culture qui relie la caisse de réserve et le pot à culture et a un effet étranglant sur le courant grâce à sa grandeur ou son arrangement, et un autre raccord entre la caisse de réserve (18) et le pot à culture, <u>caractérisé</u> en ce qu'une chambre de remplissage (16) séparée communiquant avec la caisse de réserve (12) par un trop-plein communique dans sa zone inférieure avec le pot à culture par des fentes (24) verticales, la hauteur et la largeur des fentes (24) définissant le niveau du liquide (18) dans le pot à culture du fait que le liquide forme des ménisques par suite de sa tension superficielle entre les bords des fentes (24), ces ménisques adherant avec la surface (18) du liquide dans le pot.

2. Le réservoir selon la revendication 1, <u>caractérisé</u> en ce qu'il est formé comme un insert séparé.

3. Le réservoir selon les revendications 1 ou 2, <u>caractérisé</u> en ce que la caisse de reserve (12), le conduit de remplissage (14) et la chambre de remplissage (16) sont formés comme un élément integral avec une section annulaire à insérer dans des pots à culture correspondants.

4. Le réservoir selon l'une des revendications 1 à 3, <u>caractérisé</u> en ce que le volume de la chambre de remplissage (16) est petit en comparaison du volume de la quantité du liquide se trouvant dans le pot à culture.

5. Le réservoir selon l'une des revendications 1 à 4, <u>caractérisé</u> en ce que la section de sortie définie par les fentes (24) ist élargie près du fond.

6. Le réservoir selon la revendication 3, <u>caractérisé</u> en ce que la paroi extérieure de l'insert dépasse la limite supérieure du réservoir.

7. Le réservoir selon les revendications 3 ou 6, <u>caractérisé</u> en ce que l'orifice de remplissage du conduit de remplissage (14) a une extension en entonnoir.

Fig. 1

Fig. 3

Fig. 2
Schnitt II-II

1